# EUROPÄISCHE PATENTSCHRIFT

(11) **EP 2 620 396 B1**
(45) Veröffentlichungstag und Bekanntmachung des Hinweises auf die Patenterteilung: **19.03.2014**
(21) Anmeldenummer: 12000513.7
(22) Anmeldetag: 26.01.2012
(51) Int. Cl.: B65G 51/04, B65G 51/28

(54) **Vorrichtung und Verfahren zum Prüfen des Gewichts einer Rohrpostbüchse**
Method and device for testing the weight of a pneumatic tube socket
Dispositif et procédé de contrôle du poids d'une cartouche de courrier par tube

(43) Veröffentlichungstag der Anmeldung: 31.07.2013
(73) Patentinhaber: Swisslog Healthcare GmbH, 26655 Westerstede (DE)
(72) Erfinder: Hellmers, Alrich, 26817 Rhauderfehn - Westrhauderfehn (DE)
(74) Vertreter: Heiland, Karsten

(56) Entgegenhaltungen:
- WO-A1-97/35792
- JP-A- 2003 328 687
- US-A- 4 941 777

## Beschreibung

Die Erfindung betrifft eine Vorrichtung zum Prüfen des Gewichts einer Rohrpostbüchse, mit einer Hebeeinrichtung zum Anheben der Rohrpostbüchse, und mit einer Detektionseinrichtung zur Erfassung einer angehobenen Position der Rohrpostbüchse. Daneben betrifft die Erfindung eine Rohrpostanlage mit einer entsprechenden Vorrichtung sowie ein Verfahren zum Prüfen des Gewichts einer Rohrpostbüchse gemäß dem Oberbegriff des Anspruchs 10.

Das Prüfen des Gewichts von Rohrpostbüchsen ist grundsätzlich bekannt, siehe beispielsweise US 4,343,574 (Fig. 5) und WO 97/35792 (Fig. 2 und 6). Bei zu hohem Gewicht der Rohrpostbüchse unterbleibt eine Weiterförderung derselben. In den bekannten Vorrichtungen kann es leicht zu Fehlfunktionen kommen. Wenn die Rohrpostbüchse zwar ein definiertes Gewicht überschreitet, aber durch Klemmung oder Schwergängigkeit oder Verschleiß der beteiligten Teile nicht das volle Gewicht auf den betreffenden Gewichtssensor wirkt, wird die geprüfte Rohrpostbüchse gleichwohl weitergefördert. Gemäß der WO 97/35792 ruht die Rohrpostbüchse auf einem Sperrstift. Nur wenn ein Anheben durch Luftdruck möglich ist, wird der Sperrstift zurückgezogen und die Rohrpostbüchse freigegeben.

Die US 4,941,777 offenbart eine Vorrichtung und ein Verfahren zum Prüfen des Gewichts einer Rohrpostbüchse nach dem Oberbegriff der Ansprüche 1 und 10.

Dabei wird eine Rohrpostbüchse durch Luftdruck angehoben. Sofern die Rohrpostbüchse leicht genug ist wird ein Schalter betätigt. Nur dann wird die Rohrpostbüchse weitergefördert.

In der JP 2003-328687 ist das Gewicht einer befüllten Kapsel vor der Übergabe in ein Rohrsystem messbar durch Ermittlung des Drucks in einer Leitung.

Aufgabe der vorliegenden Erfindung ist die Schaffung einer Vorrichtung zum Prüfen des Gewichts von Rohrpostbüchsen mit erhöhter Sicherheit. Zur Lösung der Aufgabe weist die erfindungsgemäße Vorrichtung die Merkmale des Anspruchs 1 auf. Bestandteil der Vorrichtung ist eine Hebeeinrichtung zum Anheben der Rohrpostbüchse. Somit wird die Rohrpostbüchse während des Prüfvorgangs aktiv angehoben. Hierzu ist vorzugsweise eine begrenzte Kraft einstellbar, die dem Gewicht der Rohrpostbüchse entgegenwirkt. Sofern die Kraft groß genug ist bzw. das Gewicht der Büchse das zulässige Höchstgewicht unterschreitet, kann die Büchse abgefördert werden. Sofern die Büchse zu schwer ist, wird sie nicht angehoben und auch nicht abgefördert.

Nach der Erfindung weist die Hebeeinrichtung einen elektromagnetischen Antrieb auf, insbesondere einen Linearantrieb. Durch Regelung des elektrischen Stroms ist auf einfache Weise eine definierte Hebekraft einstellbar. Die Stromregelung kann auch mittelbar durch eine Spannungsregelung oder durch Anlage einer definierten Spannung durchgeführt werden.

Erfindungsgemäß ist eine Detektionseinrichtung zur Erfassung einer angehobenen Position der Rohrpostbüchse vorgesehen. Aus der angehobenen Rohrpostbüchse kann abgeleitet werden, dass diese das definierte Höchstgewicht unterschreitet. Die Position kann auch mittelbar erfasst werden, etwa über mit der Rohrpostbüchse bewegbare Teile.

Nach einem weiteren Gedanken der Erfindung umfasst die Detektionseinrichtung einen Schalter, welcher mit einem bewegbaren Teil der Hebeeinrichtung oder mit der Rohrpostbüchse zusammenwirkt, derart, dass der Schalter in Abhängigkeit von der Position des bewegbaren Teils oder der Rohrpostbüchse verschiedene Schaltzustände einnimmt. Vorzugsweise sind nur zwei Schaltzustände vorgesehen.

In Fortbildung der Erfindung ist vorgesehen, dass das bewegbare Teil der Hebeeinrichtung einen Stab aufweist, mit dem die Rohrpostbüchse mittelbar oder unmittelbar anhebbar ist, insbesondere ist der Stab eine Achse eines elektromotorischen Linearantriebs.

Vorteilhafterweise wirkt das bewegbare Teil, insbesondere ein Stab, mittelbar oder unmittelbar auf einen Hebel oder Stößel des Schalters. Das bewegbare Teil bzw. der Stab sind beispielsweise zwischen einer unteren und einer oberen Position bewegbar. Entsprechend ist dabei die Rohrpostbüchse oberhalb des bewegbaren Teils angeordnet und der Schalter unterhalb desselben. Der Stab nimmt vorzugsweise eine vertikale Ausrichtung ein.

Nach einem weiteren Gedanken der Erfindung weist die Hebeeinrichtung einen Teller auf, auf dem die Rohrpostbüchse beim Anheben steht. Außerdem kann der Teller mit einem Ende eines bewegbaren Stabes verbunden sein. Der Stab wirkt mittelbar oder unmittelbar auf den Schalter.

In Fortbildung der Erfindung kann eine Signaleinrichtung zum Anzeigen oder Versenden eines Signals in unmittelbarer oder mittelbarer Abhängigkeit von der Position der Rohrpostbüchse oder vom Schaltzustand des Schalters vorgesehen sein. Ist die Büchse zu schwer und kann nicht angehoben werden, verbleibt der Schalter im Schaltzustand 0. Daraus wird sinngemäß das Signal "Büchse soll nicht gefördert werden" abgeleitet. Ist die Büchse leicht genug, wird sie angehoben und der Schalter gelangt in den Schaltzustand 1. Daraus wird das Signal "Büchse kann gefördert werden" abgeleitet.

Die erfindungsgemäße Vorrichtung ist vorzugsweise Teil einer Rohrpostanlage, insbesondere Teil einer Sende- und/oder Empfangsstation.

Eine weitere Aufgabe der Erfindung ist die Schaffung eines Verfahrens zum Prüfen des Gewichts einer Rohrpostbüchse mit erhöhter passiver Sicherheit. Zur Lösung der Aufgabe weist das erfindungsgemäße Verfahren die Merkmale des Anspruchs 10 auf.

In Fortbildung des erfinderischen Verfahrens ist vorgesehen, dass das Anheben der Rohrpostbüchse mit einer definierten, insbesondere einstellbaren Kraft erfolgt und dass vorzugsweise nur angehobene Rohrpostbüchsen für die Beförderung in einer Rohrpostanlage abgegeben werden. Sofern die eingestellte Kraft für das Anheben der Rohrpostbüchse nicht ausreicht, ist das Prüfergebnis negativ und die Rohrpostbüchse wird nicht abgefördert. Teil des Prüfvorgangs ist vorzugsweise auch die unmittelbare oder mittelbare Bestimmung der Position der Rohrpostbüchse oder anderer Teile, die bei der Prüfung bewegbar sind.

Weitere Merkmale der Erfindung ergeben sich aus der Beschreibung im Übrigen und aus den Ansprüchen. Vorteilhafte Ausführungsformen werden nachfolgend anhand von Zeichnungen näher erläutert. Es zeigen:
Fig. 1: eine Sendestation mit eingelegter Rohrpostbüchse in perspektivischer Darstellung (schräg von oben),
Fig. 2: die Sendestation gem. Fig. 1 in Seitenansicht, mit Darstellung verdeckter Linien,
Fig. 3: Teile der Sendestation mit Rohrpostbüchse gem. Fig. 1 in perspektivischer Darstellung,
Fig. 4: Teile der Sendestation gem. Fig. 3 in anderer perspektivischer Darstellung (schräg von unten),
Fig. 5. einen Teilschnitt durch die Sendestation gem. Fig. 3,
Fig. 6: eine Vorrichtung zum Anheben einer Rohrpostbüchse als Teil der Sendestation, in Seitenansicht und mit stromlosem Magneten,
Fig. 7: die Vorrichtung gem. Fig. 6 mit aufliegender Rohrpostbüchse und stromlosem Magneten,
Fig. 8: die Vorrichtung gem. Fig. 7 mit stromdurchflossenem Magneten und angehobener, ausreichend leichter Rohrpostbüchse.

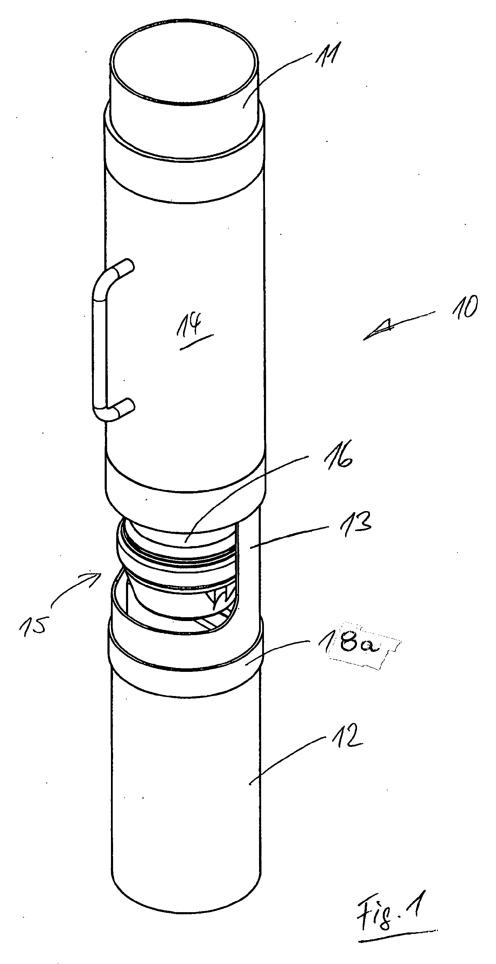

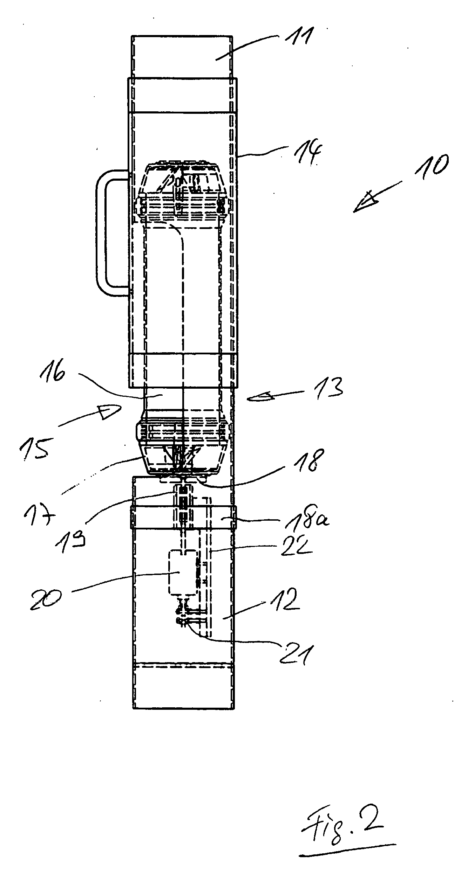

Es wird zunächst Bezug genommen auf die Figuren 1 und 2. Gezeigt ist in vereinfachter Darstellung eine Sende- und Empfangsstation 10 einer Rohrpostanlage, mit oberem Fahrrohr 11, unterem Stationsrohr 12, Aufnahmerohr 13 und Schiebehülse 14. In einer geschlossenen Position verschließt die Schiebehülse 14 den Aufnahmebereich 13. In der in den Figuren 1 und 2 gezeigten Position ist die Schiebehülse 14 teilweise durch Anheben geöffnet und erstreckt sich dabei noch über einen unteren Abschnitt des Fahrrohres 11.

Der Aufnahmebereich 13 weist einen seitlichen Ausschnitt 15 nach Art eines offenen Fensters auf. In den Aufnahmebereich 13, nämlich durch den Ausschnitt 15 hindurch ist eine Rohrpostbüchse 16 eingesetzt und liegt mit ihrem unteren Deckel 17 auf einem Teller 18 auf.

In (nicht gezeigter) geschlossener Position liegt die Schiebehülse 14 mit ihrer unteren umlaufenden Kante an einem umlaufenden Kragen 18a des Stationsrohrs 12 an, so dass der Aufnahmebereich 13 je nach Gestaltung und Ausbildung der aneinander anliegenden Flächen nahezu luftdicht verschlossen sein kann.

Fahrrohr 11, mittiges Aufnahmerohr 13 und Stationsrohr 12 können ineinander übergehend einteilig ausgebildet sein. Nicht gezeigt sind die Fortsetzung des Fahrrohres 11 nach oben und des Stationsrohres 12 nach unten.

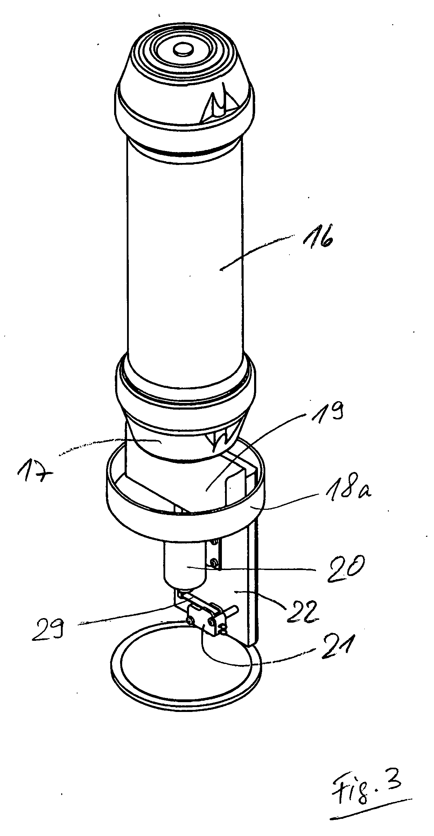

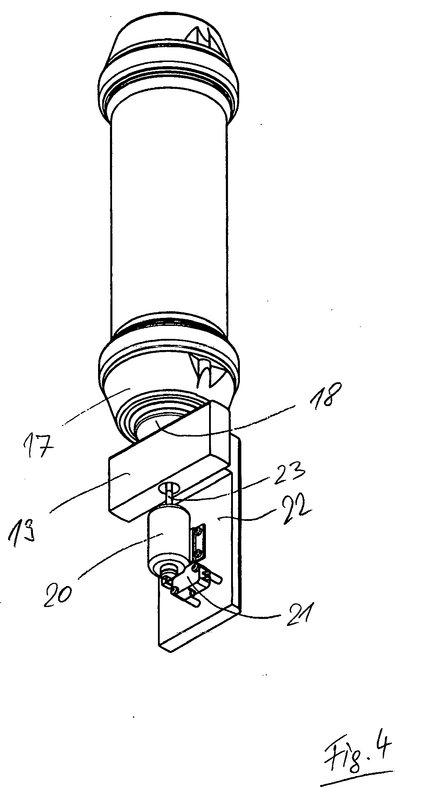

Fig. 3 zeigt die Vorrichtung ohne Fahrrohr 11, Aufnahmerohr 13 und Stationsrohr 12. Dies gilt auch für die weiteren Figuren 4 bis 8.

Im Bereich des Stationsrohrs 12 sind von oben nach unten, ausgehend vom Teller 18, ein Aufpralldämpfer 19, eine elektromotorische Hebeeinrichtung, insbesondere als Linearaktuator 20, und ein Sensor angeordnet, wobei der Sensor insbesondere nach Art eines Schalters 21 ausgebildet ist. Zumindest Schalter 21 und Linearaktuator 20 sind an einer gemeinsamen aufrechten Tragplatte 22 gehalten, insbesondere auch der Aufpralldämpfer 19. Die Tragplatte 22 ist in das Stationsrohr 12 eingesetzt und dort fixiert.

Der Linearaktuator 20 weist eine in Achsialrichtung (Fahrrichtung der Rohrpostbüchse) elektromotorisch verstellbare Stange (oder Stab) 23 auf. Diese ist oben, außerhalb des Linearaktuators 20 mit einer Tellerstange 24 verbunden, nämlich mittels einer Außengewinde-Innengewinde-Verbindung 25. Oben auf der Tellerstange 24 sitzt der Teller 18 und liegt dabei zugleich auf dem Aufpralldämpfer 19 auf. Um dies zu ermöglichen, weist der Aufpralldämpfer 19 mittig eine aufrechte Bohrung 26 auf, durch die sich Tellerstange 24 und Stange 23 hindurch erstrecken. In der Bohrung 26 kann eine Führung für die Stange 23, Tellerstange 24 und/oder Gewindeverbindung 25 vorgesehen sein. Vorzugsweise ist aber zur Vermeidung zusätzlicher Reibung keine Führung vorhanden. Durch die Gewindeverbindung 25 kann auch die Relativposition des Tellers 18 eingestellt werden.

Die Stange 23 ist unterhalb des Linearaktuators 20 mit einer Verbreiterung 27 versehen, welche an einer Tastrolle 28 am Ende eines Schalthebels 29 des Schalters 21 anliegt.

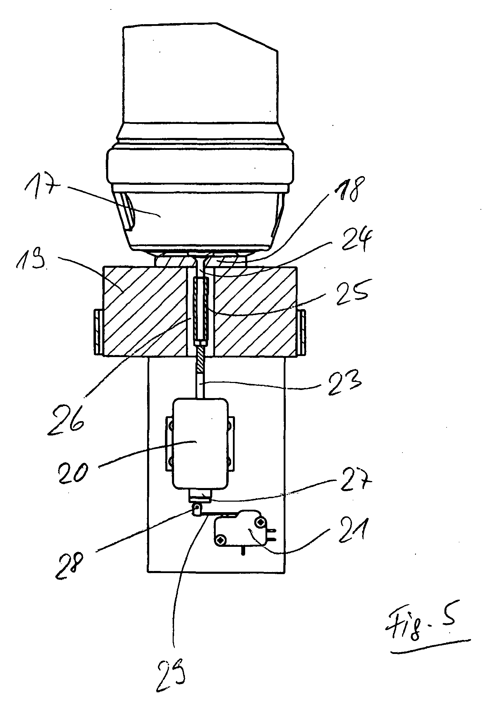

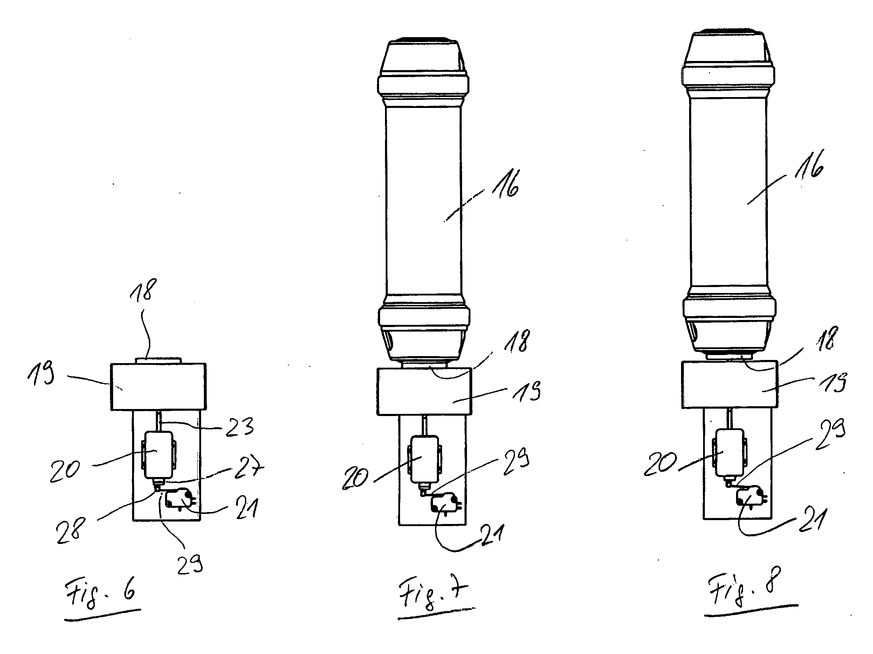

Wichtig für die Funktion der Vorrichtung ist die Position des Schalthebels 29. Genauer erläutert wird dies im Zusammenhang mit den Figuren 6 bis 8. Dabei entsprechen die Darstellung gem. Fig. 5 und die Positionen der darin gezeigten Teile der Darstellung gem. Fig. 7 (mit Rohrpostbüchse) und Fig. 6 (ohne Rohrpostbüchse).

Bei stromlosem Elektromagneten bzw. Linearaktuator 20 ist die Stange 23 nicht angehoben. Entsprechend liegt der Teller 18 auf dem Aufpralldämpfer 19 auf. Des Weiteren liegt die Verbreiterung 27 an der Tastrolle 28 an und hält den Schalthebel 29 in einer hier im Wesentlichen waagerechten Ausgangsstellung. Durch Einsetzen der Rohrpostbüchse 16 in die Station 10 ändern sich die beschriebene Position des Tellers 18 und der Schaltzustand des Schalters 21 nicht, auch nicht durch eine durch das Fahrrohr 11 ankommende Rohrpostbüchse 16, siehe Fig. 7.

Zur Prüfung des Gewichts der auf dem Teller 18 aufliegenden Rohrpostbüchse 16 wird der Linearaktuator 20 aktiviert, so dass die Stange 23 einen achsial gerichteten Antrieb in Richtung auf die Rohrpostbüchse 16 erhält. Über den Teller 18 soll die Rohrpostbüchse 16 angehoben werden. Tatsächlich wird die Rohrpostbüchse nur angehoben, wenn die Kraft des Linearaktuators 20 hierfür ausreicht. Einstellbar ist die Kraft beispielsweise durch Regelung der elektrischen Spannung am Linearaktuator entsprechend einer konstruktiv vorgegebenen Kennlinie.

Sofern die Kraft ausreicht, bewegen sich Stange 23, Tellerstange 24, Teller 18, Rohrpostbüchse 16 und Verbreiterung 27 nach oben. Der Schalthebel 29 ist federnd gelagert und drückt mit der Tastrolle 28 gegen die Verbreiterung 27. Entsprechend bewegt sich der Schalthebel 29 mit der Verbreiterung 27 aufwärts, so dass der Schalter 21 schaltet und ein entsprechendes Signal abgreifbar ist. In den allermeisten Fällen ist das Ziel der Gewichtsprüfung die Feststellung, dass die Rohrpostbüchse ein Höchstgewicht nicht überschreitet. Nur wenn dies der Fall ist, wird die Rohrpostbüchse angehoben und nur dann geht der Schalter 21 in einen anderen Schaltzustand über. Diese Art der Gewichtsprüfung beinhaltet ein hohes Maß an Sicherheit gegen Fehler, insbesondere gegen eine fehlerhafte Meldung der Einhaltung der Gewichtsobergrenze.

Die axiale Auslenkung der Stange 23 ist durch geeignete (hier nicht gezeigte) Mittel im Linearaktuator begrenzt. Alternativ oder zusätzlich kann das Signal des Schalters 21 zum Abschalten des Linearaktuators 20 führen.

In Fig. 8 erkennbar ist die leicht angehobene Position des Tellers 18 relativ zur Position in Fig. 7, ebenso der leicht aufwärts geschwenkte Schalthebel 29 relativ zur Position in Fig. 7 (und Fig. 5).

Sofern die Rohrpostbüchse das vorgesehene Höchstgewicht überschreitet, erfolgt kein Anheben des Deckels 17. Es bleibt dann bei der in Fig. 7 gezeigten Position und der Schalter 21 ändert seinen Schaltzustand nicht.

Natürlich kann die Vorrichtung auch zur Bestimmung der Überschreitung eines Mindestgewichts verwendet werden. Dies könnte dann vorgesehen sein, wenn möglichst nur gefüllte Rohrpostbüchsen gefördert werden sollen. Eine zu leichte Rohrpostbüchse führt nach Aktivierung des Linearaktuators 20 zu einer Änderung des Schaltzustands im Schalter 21. In der Folge unterbleibt die Abförderung der Rohrpostbüchse.

Ein wichtiges Anwendungsgebiet der Erfindung ist die Förderung von Bargeld per Rohrpost in Banken, Kaufhäusern oder anderen Einrichtungen, in denen viel Bargeld umläuft. Es sind aber auch andere Anwendungen möglich, etwa die Förderung von biologischem Material in Krankenhäusern oder die Förderung von Kleinteilen in Fertigungsbetrieben.

### Bezugszeichenliste:

- 10: Sende- und Empfangsstation
- 11: Fahrrohr
- 12: Stationsrohr
- 13: Aufnahmerohr
- 14: Schiebehülse
- 15: Ausschnitt
- 16: Rohrpostbüchse
- 17: Deckel
- 18: Teller
- 18a: Kragen
- 19: Aufpralldämpfer
- 20: Linearaktuator
- 21: Schalter
- 22: Tragplatte
- 23: Stange / Stab
- 24: Tellerstange
- 25: Gewindeverbindung
- 26: Bohrung
- 27: Verbreiterung
- 28: Tastrolle
- 29: Schalthebel

## Patentansprüche

1. Vorrichtung zum Prüfen des Gewichts einer Rohrpostbüchse (16), mit einer Hebeeinrichtung zum Anheben der Rohrpostbüchse (16), und mit einer Detektionseinrichtung zur Erfassung einer angehobenen Position der Rohrpostbüchse (16), **dadurch gekennzeichnet, dass** die Hebeeinrichtung einen elektromagnetischen Antrieb aufweist.

2. Vorrichtung nach Anspruch 1, **dadurch gekennzeichnet, dass** die Hebeeinrichtung einen elektromagnetischen Linearantrieb (20) aufweist.

3. Vorrichtung nach Anspruch 1, **dadurch gekennzeichnet, dass** die Detektionseinrichtung einen Schalter (21) umfasst, welcher mit einem bewegbaren Teil (23, 24) der Hebeeinrichtung oder mit der Rohrpostbüchse zusammenwirkt, derart, dass der Schalter in Abhängigkeit von der Position des bewegbaren Teils oder der Rohrpostbüchse verschiedene Schaltzustände einnimmt.

4. Vorrichtung nach Anspruch 3, **dadurch gekennzeichnet, dass** nur zwei Schaltzustände vorgesehen sind.

5. Vorrichtung nach Anspruch 3 oder 4, **dadurch gekennzeichnet, dass** das bewegbare Teil der Hebeeinrichtung einen Stab (23) aufweist, mit dem die Rohrpostbüchse mittelbar oder unmittelbar anhebbar ist, wobei der Stab insbesondere eine Achse eines elektromotorischen Linearantriebs ist.

6. Vorrichtung nach Anspruch 3, 4 oder 5, **dadurch gekennzeichnet, dass** das bewegbare Teil, insbesondere ein Stab, mittelbar oder unmittelbar auf einen Hebel (29) oder Stößel des Schalters wirkt.

7. Vorrichtung nach Anspruch 1 oder einem der weiteren Ansprüche, **dadurch gekennzeichnet, dass** die Hebeeinrichtung einen Teller (18) aufweist, auf dem die Rohrpostbüchse beim Anheben steht, und dass der Teller vorzugsweise mit einem Ende eines bewegbaren Stabes (23) verbunden ist.

8. Vorrichtung nach Anspruch 1 oder einem der weiteren Ansprüche, **gekennzeichnet durch** eine Signaleinrichtung zum Anzeigen oder Versenden eines Signals in Abhängigkeit von der Position der Rohrpostbüchse oder vom Schaltzustand eines zugeordneten Schalters (21).

9. Rohrpostanlage mit einer Vorrichtung nach einem der voranstehenden Ansprüche.

10. Verfahren zum Prüfen des Gewichts einer Rohrpostbüchse (16), wobei die Rohrpostbüchse durch eine Hebeeinrichtung als Teil des Prüfvorgangs mit einer Kraft zum Anheben beaufschlagt und eine angehobene Position der Rohrpostbüchse erfasst wird, **dadurch gekennzeichnet, dass** die Hebeeinrichtung elektromagnetisch angetrieben wird.

11. Verfahren nach Anspruch 10, **dadurch gekennzeichnet, dass** das Anheben der Rohrpostbüchse mit einer definierten, insbesondere einstellbaren Kraft erfolgt und dass vorzugsweise nur angehobene Rohrpostbüchsen für die Beförderung in einer Rohrpostanlage abgegeben werden.

## Claims

1. Apparatus for testing the weight of a pneumatic dispatch tube (16), with a lifting device for raising the pneumatic dispatch tube (16), and with a detection device for sensing a raised position of the pneumatic dispatch tube (16), **characterized in that** the lifting device has an electromagnetic drive.

2. Apparatus according to Claim 1, **characterized in that** the lifting device has an electromagnetic linear drive (20).

3. Apparatus according to Claim 1, **characterized in that** the detection device comprises a switch (21), which interacts with a movable part (23, 24) of the lifting device or with the pneumatic dispatch tube in such a way that the switch assumes various switching states in dependence on the position of the movable part or the pneumatic dispatch tube.

4. Apparatus according to Claim 3, **characterized in that** only two switching states are provided.

5. Apparatus according to Claim 3 or 4, **characterized in that** the movable part of the lifting device has a rod (23), with which the pneumatic dispatch tube can be indirectly or directly raised, the rod being in particular a spindle of an electromotive linear drive.

6. Apparatus according to Claim 3, 4 or 5, **characterized in that** the movable part, in particular a rod, acts indirectly or directly on a lever (29) or plunger of the switch.

7. Apparatus according to Claim 1 or one of the further claims, **characterized in that** the lifting device has a plate (18), on which the pneumatic dispatch tube stands during raising, and **in that** the plate is preferably connected to one end of a movable rod (23).

8. Apparatus according to Claim 1 or one of the further claims, **characterized by** a signalling device for indicating or sending a signal in dependence on the position of the pneumatic dispatch tube or the switching state of an assigned switch (21).

9. Pneumatic dispatch system with an apparatus according to one of the preceding claims.

10. Method for testing the weight of a pneumatic dispatch tube (16), a force for raising being applied to the pneumatic dispatch tube by a lifting device as part of the testing operation and a raised position of the pneumatic dispatch tube being sensed, **characterized in that** the lifting device is electromagnetically driven.

11. Method according to Claim 10, **characterized in that** the raising of the pneumatic dispatch tube takes place with a defined force, in particular a force that can be set, and **in that** preferably only raised pneumatic dispatch tubes are passed for being transported in a pneumatic dispatch system.

## Revendications

1. Dispositif de vérification du poids d'une cartouche-furet (16), le dispositif présentant un dispositif de relèvement qui relève la cartouche-furet (16) et un dispositif de détection qui saisit la position relevée de la cartouche-furet (16), **caractérisé en ce que**
le dispositif de relèvement présente un entraînement électromagnétique.

2. Dispositif selon la revendication 1, **caractérisé en ce que** le dispositif de relèvement présente un entraînement électromagnétique linéaire (20).

3. Dispositif selon la revendication 1, **caractérisé en ce que** le dispositif de détection comporte un commutateur (21) qui coopère avec une partie mobile (23, 24) du dispositif de relèvement ou avec la cartouche-furet de telle sorte que le commutateur prenne différents états de commutation en fonction de la position de la partie mobile ou de la cartouche-furet.

4. Dispositif selon la revendication 3, **caractérisé en ce que** seuls deux états de commutation sont prévus.

5. Dispositif selon les revendications 3 ou 4, **caractérisé en ce que** la partie mobile du dispositif de relèvement présente un barreau (23) par lequel la cartouche-furet peut être relevée directement ou indirectement, le barreau étant en particulier l'axe d'un entraînement linéaire par moteur électrique.

6. Dispositif selon les revendications 3, 4 ou 5, **caractérisé en ce que** la partie mobile et en particulier un barreau agissent directement ou indirectement sur un levier (29) ou sur le poussoir du commutateur.

7. Dispositif selon la revendication 1 ou l'une des autres revendications, **caractérisé en ce que** le dispositif de relèvement présente un plateau (18) sur lequel la cartouche-furet vient se placer lors du relèvement et **en ce que** le plateau est relié de préférence à une extrémité d'un barreau mobile (23).

8. Dispositif selon la revendication 1 ou l'une des autres revendications, **caractérisé par** un dispositif de signalisation qui affiche ou envoie un signal en fonction de la position de la cartouche-furet ou de l'état de commutation d'un commutateur (21) qui lui est associé.

9. Installation de poste pneumatique dotée d'un dispositif selon l'une des revendications précédentes.

10. Procédé de vérification du poids d'une cartouche-furet (16), une force de relèvement pouvant être appliquée sur la cartouche-furet par un dispositif de relèvement dans le cadre de l'opération de vérification et la position relevée de la cartouche-furet étant saisie,
**caractérisé en ce que**
le dispositif de relèvement est entraîné par voie électromagnétique.

11. Procédé selon la revendication 10, **caractérisé en ce que** le relèvement de la cartouche-furet s'effectue par une force définie et en particulier réglable et **en ce que** de préférence seules des cartouches-furet relevées sont délivrées pour être transportées dans une installation de poste pneumatique.
